# FASCICULE DE BREVET EUROPEEN

(11) **EP 1 224 786 B1**
(45) Date de publication et mention de la délivrance du brevet: **12.12.2007**
(21) Numéro de dépôt: 00971490.8
(22) Date de dépôt: 24.10.2000
(51) Int. Cl.: H04L 29/06, H04L 12/24, H04L 12/28, H04L 12/56

(54) **PROCEDE D'ESTIMATION DE TEMPS DE TRANSFERT DE PAQUETS DANS UN RESEAU SANS FIL**
VERFAHREN ZUR SCHÄTZUNG DER PAKETÜBERTRAGUNGSZEIT ÜBER EIN DRAHTLOSES NETZWERK
METHOD FOR ESTIMATING THE TRANSFER TIME FOR PACKETS OF A WIRELESS NETWORK

(30) Priorité: 28.10.1999 FR 9913513
(43) Date de publication de la demande: 24.07.2002
(73) Titulaire: NORTEL NETWORKS SA, 78280 Guyancourt Cedex 9 (FR)
(72) Inventeur: LUCIDARME, Thierry, F-78180 Montigny le Bretonneux (FR); LESCUYER, Pierre, F-78180 Montigny le Bretonneux (FR)
(74) Mandataire: Ameline, Jean-Paul B.C.
(86) Numéro de dépôt international: PCT/FR2000/002954
(87) Numéro de publication internationale: WO 2001/031878

(56) Documents cités:
- EP-A- 0 881 799
- STEVENS ET AL: "TCP/IP ILLUSTRATED, Vol. 1. THE PROTOCOLS" , PROFESSIONAL COMPUTING SERIES,US,READING, MA: ADDISON WESLEY, PAGE(S) 85-96 XP002106390 ISBN: 0-201-63346-9 page 85, ligne 1 -page 87, ligne 22 page 95, ligne 15 -page 96, ligne 14
- STEVENS; W R: "TCP/IP ILLUSTRATED, Vol. 1. THE PROTOCOLS" 1994 , PROFESSIONAL COMPUTING SERIES,US,READING, MA : ADDISON WESLEY, PAGE(S) 97-110 XP002144685 ISBN: 0-201-63346-9 page 97, ligne 1 -page 99, ligne 5
- STEVENS; W R: "TCP/IP ILLUSTRATED, Vol. 1. THE PROTOCOLS" 1994 , PROFESSIONAL COMPUTING SERIES,US,READING, MA : ADDISON WESLEY, PAGE(S) 69-83 XP002144686 ISBN: 0-201-63346-9 page 74, ligne 1 - ligne 15
- HOFF ET AL: "Analysis of the General Packet Radio Service (GPRS) of GSM as access to the Internet" ICUPC '98. IEEE 1998 INTERNATIONAL CONFERENCE ON UNIVERSAL PERSONAL COMMUNICATIONS. CONFERENCE PROCEEDINGS, FLORENCE, ITALY, vol. 1, 5 - 9 octobre 1998, pages 415-419, XP002144950 ISBN: 0-7803-5106-1

## Description

La présente invention concerne les communications sans fil, et plus particulièrement l'accès sans fil à des réseaux de transmission de paquets tel que l'Internet.

L'accès sans fil aux réseaux de paquets se développe rapidement. Certains réseaux de seconde génération (GSM, « Global System for Mobile communications »), comportent maintenant un service de transmission de paquets appelé GPRS (« General Packet Radio Service »). Les systèmes de troisième génération, notamment l'UMTS (« Universal Mobile Telecommunications System »), sont conçus dans l'optique du multimédia, et incorporeront donc des services de transmission de paquets.

Des terminaux mobiles sont capables d'accéder à des réseaux fixes par l'intermédiaire des différents réseaux de communication sans fil, qui peuvent être des réseaux de même type (par exemple cas d'abonnements multiples ou d'accords d'itinérance entre plusieurs opérateurs) ou de type différent (terminaux multimodes). D'autre part, un même réseau sans fil peut proposer plusieurs modes d'accès présentant des caractéristiques différentes : circuit ou paquet, bandes de fréquence multiples (bande à 900 MHz ou à 1800 MHz dans le cas du GSM), duplex fréquentiel (FDD) ou temporel (TDD) dans le cas de l'UMTS, débit modifiable, etc.

Pour l'accès au réseau Internet, les utilisateurs, fixes ou mobiles, peuvent s'adresser à différents fournisseurs appelés ISP (« Internet Service Provider »). En particulier, un même réseau sans fil peut comporter des interfaces (passerelles) avec plusieurs ISP.

Un accès sans fil à l'Internet emprunte un segment de communication sans fil, entre le mobile et la passerelle et un segment de communication fixe au-delà de la passerelle.

Ainsi, un utilisateur sans fil souhaitant se connecter ou transférer des données par l'intermédiaire de l'Internet pourra à l'avenir sélectionner pour chaque segment un opérateur donné pour acheminer son appel, selon des considérations tarifaires ou de qualité de service. La sélection peut également porter sur différents modes d'accès proposés par un opérateur, notamment l'opérateur sans fil. Cette sélection peut être totalement ou partiellement automatique.

Du point de vue d'un utilisateur d'Internet, le temps nécessaire pour transférer des messages ou des fichiers de taille donnée depuis ou vers une unité distante est un paramètre clé de la qualité de service. Dans le cas d'un accès sans fil, le paramètre est encore plus critique compte tenu des ressources d'accès radio mobilisées pendant le transfert, qui impliquent généralement une facturation plus élevée que pour un accès depuis un réseau fixe. S'il dispose à l'avance de données lui permettant d'avoir une idée de ce paramètre, l'utilisateur peut apprécier l'opportunité de différer sa requête, d'essayer de la formuler par un autre canal ou d'y renoncer.

D'autre part, il se développe des applications temps réel, notamment de téléphonie, utilisant l'Internet. Dans ce contexte, le temps de transfert des paquets est également un paramètre crucial, puisqu'un retard supérieur à quelques centaines de millisecondes n'est pas acceptable pour de telles applications.

Le temps de transfert dépend de l'encombrement dans le réseau fixe, comme peut le percevoir tout utilisateur d'Internet. Pour un accès mobile, il dépend aussi du temps passé par les paquets dans l'infrastructure du réseau de communication sans fil, et du temps de transmission sur l'interface radio lequel dépend à son tour de la qualité du lien radio compte tenu des contraintes de débit, du multiplexage et des répétitions éventuelles si un protocole sécurisé (ARQ) est appliqué.

Certains protocoles du réseau Internet, notamment ICMP (« Internet Control Message Protocol ») qui fait partie intégrante du protocole IP (« Internet Protocol ») ou encore des protocoles applicatifs tels que FTP (« File Transfer Protocol »), comportent des procédures permettant de signaler les temps de transport des paquets entre deux points raccordés au réseau. Mais dans le cas d'un accès sans fil, ces procédures telles qu'elles sont utilisées ne permettent pas de déterminer si un grand retard de transmission est dû à des problèmes dans le segment sans fil ou dans le segment fixe de la communication.

Un but de la présente invention est s'affranchir de cette limitation, et de fournir à l'utilisateur sans fil de l'information qui l'aide à déterminer au mieux comment acheminer son appel.

L'invention propose ainsi un procédé d'estimation de temps de transfert dans un système comportant au moins un réseau de communication sans fil et une partie fixe, dans lequel le réseau de communication sans fil comprend des stations radio aptes à communiquer avec des terminaux mobiles, et des commutateurs incluant des commutateurs de paquets aptes à supporter des communications en mode paquets avec des terminaux mobiles à travers certaines au moins des stations radio, dans lequel au moins un des commutateurs de paquets constitue une passerelle du réseau de communication sans fil avec un réseau de transmission de paquets appartenant à la partie fixe du système, et dans lequel on transmet au moins un message de mesure à un terminal mobile en réponse à une requête d'indication de temps de transfert de paquet issue dudit terminal mobile. A l'aide du message de mesure reçu par le terminal mobile, on détermine au moins un temps de transfert de paquet entre le terminal mobile et une passerelle du réseau de communication sans fil avec le réseau de transmission de paquets.

Le procédé forme des messages de mesure qui permettent à l'utilisateur sans fil (ou à une procédure automatique mise en oeuvre par une application exécutée dans son terminal) de déterminer un temps de transfert sur le segment sans fil de la communication. Ce temps de transfert peut être le temps « downlink », depuis la passerelle jusqu'au terminal mobile, éventuellement complété par le temps « uplink », depuis le terminal mobile jusqu'à la passerelle.

II peut également être le temps d'aller-retour d'un paquet entre le terminal mobile et la passerelle.

A partir d'une telle estimation du temps passé par des paquets dans le réseau sans fil, l'utilisateur (ou une procédure automatique mise en oeuvre par une application exécutée dans son terminal) est guidé dans le choix des modalités d'accès sans fil. Il peut décider d'initier immédiatement la communication envisagée si le temps indiqué est relativement court, ou sinon décider de la différer, ou encore de la formuler par un autre canal (autre opérateur et/ou autre mode d'accès) après une requête similaire d'indication de temps de transfert.

Avantageusement, on détermine en outre, à l'aide d'un second message de mesure issu d'une unité distante accessible par le réseau de transmission de paquets à une adresse spécifiée dans la requête d'indication de temps de transfert, un temps de transfert de paquet entre ladite unité distante et la passerelle. Ceci permet à l'utilisateur d'avoir une idée de la qualité de service que lui offre à l'instant considéré l'ISP auquel il a fait appel. Il peut aussi en tenir compte pour décider comment effectuer le transfert envisagé. Le temps de transfert de paquet entre l'unité distante et la passerelle peut être déterminé en soustrayant le temps de transfert entre le terminal mobile et la passerelle (déduit du premier message de mesure) du temps de transfert entre le terminal mobile et l'unité distante (déduit du second message de mesure).

Dans une réalisation adaptée aux réseaux fonctionnant selon le protocole IP, les messages de mesure peuvent être des réponses à des messages du protocole ICMP émis par le terminal mobile.

En principe, le terminal mobile ignore l'adresse IP de la passerelle pertinente. Pour la déterminer, une façon commode consiste à émettre préalablement un paquet IP ayant la valeur 1 dans le champ TTL (« Time To Live »). La passerelle, qui est le premier routeur IP rencontré par ce paquet, retourne alors un message d'erreur contenant son adresse qui peut ensuite être utilisée par le terminal mobile.

Un autre aspect de la présente invention se rapporte à un terminal mobile de radiocommunication, comprenant des moyens de communication en mode paquets avec des unités distantes reliées à un système comportant au moins un réseau de communication sans fil et une partie fixe, des moyens d'émission de paquets contenant des requêtes d'indication de temps de transfert de paquet, et des moyens pour déterminer, à l'aide d'un message de mesure reçu en réponse à une requête d'indication de temps de transfert, un temps de transfert de paquet entre le terminal mobile et une passerelle du réseau de communication sans fil avec un réseau de transmission de paquets appartenant à la partie fixe du système.

Dans une application au transfert de données, le terminal mobile peut comprendre des moyens pour demander l'établissement de ressources pour un transfert de données depuis ou vers une unité distante accessible par le réseau de transmission de paquets, lesquels moyens coopèrent avec les moyens de détermination de temps de transfert pour que l'établissement des ressources soit demandé dans des conditions qui dépendent d'au moins un temps de transfert de paquet déterminé par les moyens de détermination de temps de transfert.

Dans une application de téléphonie, le terminal mobile peut comprendre des moyens pour demander l'établissement d'une communication téléphonique avec une unité distante accessible d'une part par le réseau de transmission de paquets et d'autre part par un réseau à commutation de circuit relié au réseau de communication sans fil, lesquels moyens coopèrent avec les moyens de détermination de temps de transfert pour que l'établissement de la communication téléphonique soit demandé par l'intermédiaire soit du réseau de transmission de paquets soit du réseau à commutation de circuit en fonction d'au moins un temps de transfert de paquet déterminé par les moyens de détermination de temps de transfert.

D'autres particularités et avantages de la présente invention apparaîtront dans la description ci-après d'exemples de réalisation non limitatifs, en référence aux dessins annexés, dans lesquels :
- la figure 1 est un schéma général d'une architecture de système de communication à laquelle l'invention peut s'appliquer ;
- les figures 2 et 3 sont des schémas illustrant des piles de protocoles de communication mis en oeuvre dans des entités du système de la figure 1, dans le cas de réseaux sans fil de seconde et de troisième génération, respectivement ;
- la figure 4 est un schéma synoptique d'un terminal mobile pouvant mettre en oeuvre l'invention ; et
- la figure 5 est un diagramme montrant une décomposition du temps de transfert des paquets.

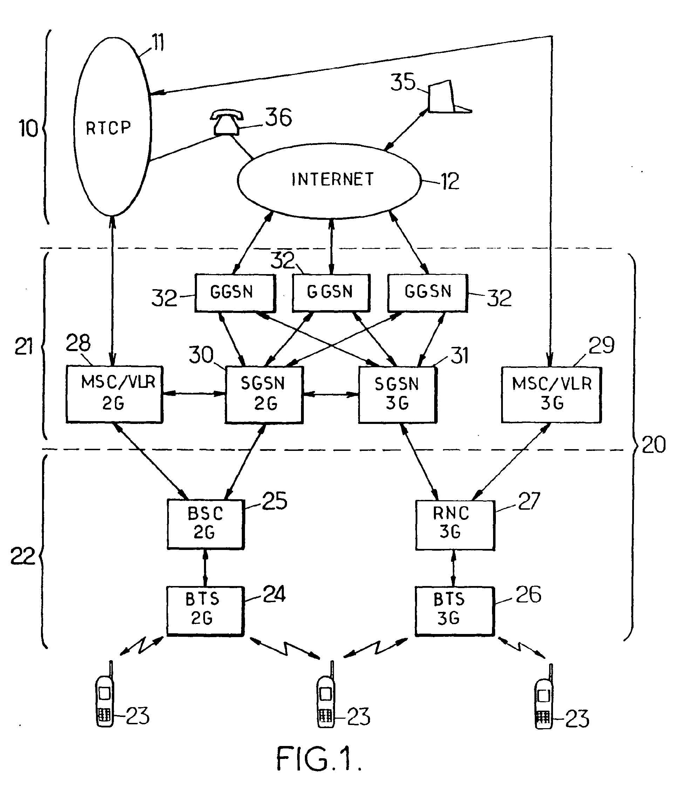

Le système de communication représenté schématiquement sur la figure 1 comporte une partie fixe 10 et un réseau de communication sans fil 20. La partie fixe 10 comporte un réseau téléphonique commuté public 11 et un réseau Internet 12. Le réseau Internet 12 fonctionne classiquement selon le protocole IP (voir la Request For Comments (RFC) 791 de l'Internet Engineering Task Force (IETF) pour la version 4, et la RFC 2460 de l'IETF pour la version 6).

Le réseau sans fil 20 est classiquement divisé en un coeur de réseau 21, comprenant des commutateurs interconnectés, et un réseau d'accès 22 fournissant les liens radio avec les terminaux mobiles 23.

Dans l'exemple représenté, le réseau sans fil 20 combine des éléments de seconde génération (GSM) et des éléments de troisième génération (UMTS). Dans le GSM, le réseau d'accès 22, appelé BSS (« Base Station Sub-system »), se compose de stations de base (BTS) 24 distribuées sur la zone de couverture pour communiquer par radio avec les terminaux mobiles 23, et de contrôleurs de stations de base (BSC) 25 reliés au coeur de réseau 21. Dans le cas de l'UMTS, le réseau d'accès 22, appelé RNS (« Radio Network System »), se compose de stations de base (BTS) 26 et de contrôleurs de réseau radio (RNC) 27 reliés au coeur de réseau 21.

Le coeur de réseau 21 comporte des centres de commutation du service mobile (MSC) 28, 29 de seconde et de troisième générations, associés à des registres de localisation des visiteurs (VLR). Ces MSC 28, 29 assurent la commutation de circuit pour les communications de téléphonie ou de transfert de données en mode circuit. Ils sont reliés au réseau commuté 11 de la partie fixe 10.

Pour le mode paquets, les commutateurs du coeur de réseau 21 sont appelés GSN (« GPRS Support Node »). Les commutateurs de paquets 30. 31 reliés au réseau d'accès 22 sont appelés SGSN (« Serving GSN »). D'autres commutateurs de paquets 32 du coeur de réseau 21, appelés GGSN (« Gateway GSN »), sont des passerelles avec le réseau Internet 12. Ces passerelles 32 sont reliées aux SGSN 30, 31 pour permettre aux terminaux mobiles 23 d'accéder au réseau Internet 12. Sur la figure 1, on a représenté plusieurs GGSN 32, qui peuvent correspondre à des passerelles gérées par des ISP différents.

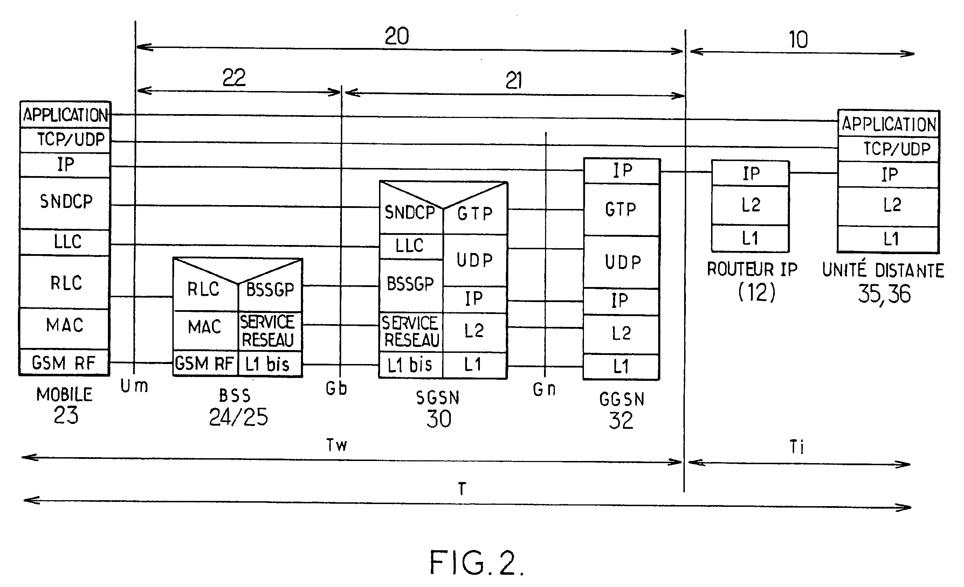

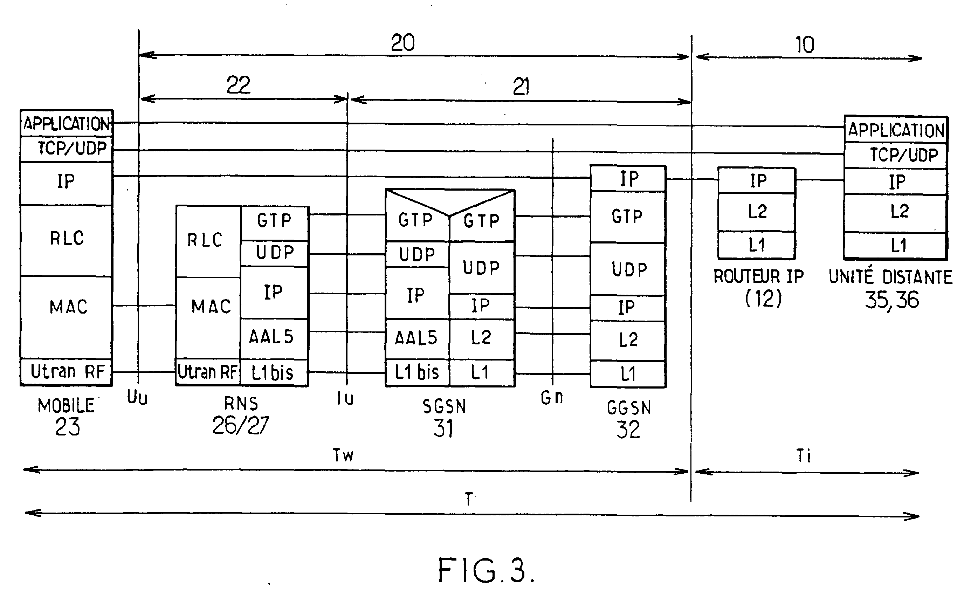

Les figures 2 et 3 sont des illustrations des protocoles pouvant être mis en oeuvre dans des communications en mode paquet entre un terminal mobile 23 et une unité distante telle qu'un serveur IP 35 ou un terminal d'usager 36 accessible à travers un ou plusieurs routeurs IP appartenant au réseau 12. Dans les deux cas, les protocoles employés sont les mêmes dans la partie fixe 10 ainsi qu'à l'interface « Gn » entre le GGSN 32 et les SGSN 30, 31. Dans le réseau Internet 12, au-dessus des couches 1 et 2 du modèle OSI (L1, L2), IP est utilisé comme protocole de réseau. La même couche IP est présente dans les terminaux mobiles 23 lorsqu'ils accèdent à l'Internet. Cet accès peut se faire lors de sessions TCP (« Transmission Control Protocol », RFC 793 de l'IETF), ou par échange de datagrammes UDP (« User Datagram Protocol », RFC 768 de l'IETF), pour permettre aux applications exécutées dans le mobile 23 et l'unité distante 35, 36 d'échanger les données.

Les protocoles utilisés dans le réseau sans fil 20 sont décrits, pour la deuxième génération (figure 2), dans les Recommandations GSM 03.60, 03.64, 08.16 et 09.61 publiées par l'ETSI (« European Telecommunications Standards Institute »), et pour la troisième génération (figure 3) dans les spécifications 3GPP 25.301 et 3GPP 25.410 publiées par l'ETSI. Au niveau de l'Interface Gn, des couches IP et UDP supplémentaires, ainsi qu'une couche du protocole GTP, sont présentes entre la couche 2 et la couche IP correspondant à celle du terminal mobile 23. Dans le réseau UMTS de troisième génération, ces couches IP, UDP et GTP supplémentaires sont également présentes à l'interface « lu » entre le SGSN 31 et le RNS 22. Dans le cas du GPRS (figure 2), le SGSN 30 communique selon d'autres protocoles avec le BSS 22 et le terminal mobile 23.

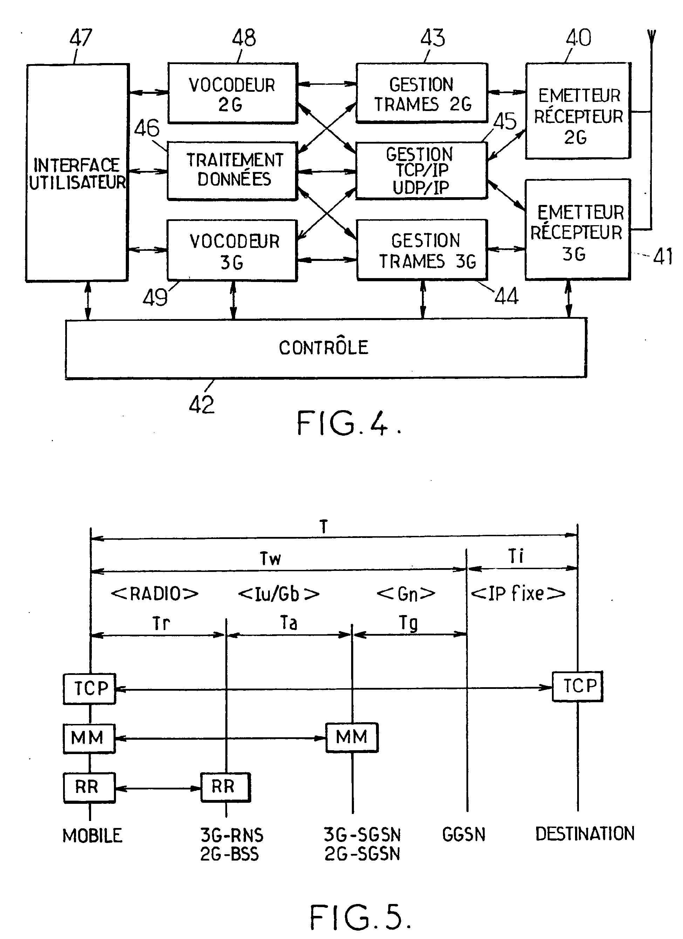

La figure 4 illustre schématiquement un exemple de terminal mobile 23 pouvant communiquer avec le système de la figure 1. Cet exemple de terminal est capable de communiquer par l'intermédiaire du réseau de seconde génération (2G) ou du réseau de troisième génération (3G). Il comporte ainsi deux émetteurs-récepteurs 40, 41 contrôlés par une unité centrale de contrôle 42 du terminal. Les émetteurs-récepteurs 40, 41 contrôlés par l'unité 42 mettent en oeuvre les couches basses des protocoles de transmission (jusqu'à la couche SNDCP dans le cas de la figure 2 et jusqu'à la couche RLC dans le cas de la figure 3). Pour les communications en mode circuit, le terminal de la figure 4 comporte deux modules 43, 44 qui gèrent respectivement les trames GSM et les trames UMTS. Pour le mode paquet, un module 45 de mise en forme de datagrammes est relié aux émetteurs-récepteurs 40, 41. Ce module 45 gère notamment les protocoles TCP/IP et/ou UDP/IP représentés sur la partie gauche des figures 2 et 3.

Le module 46 de la figure 4 schématise les organes de traitement de données dont est pourvu le terminal mobile et qui coopèrent avec une interface utilisateur 47. Le terminal multimode comporte en outre des vocodeurs GSM 48 et UMTS 49 pour traiter les signaux de phonie. L'ensemble des modules 43-49 est contrôlé par l'unité 42 qui traite les opérations de signalisation. En pratique, ces modules 43-49 et cette unité 42 peuvent être réalisés à partir d'un microprocesseur ou microcontrôleur associé à des interfaces appropriées, ainsi qu'il est usuel dans la technologie des terminaux mobiles.

Les données traitées par le module 46 seront le plus souvent échangées en mode paquets, par l'intermédiaire du module 45. Mais elles peuvent également être transférées en mode circuit par l'intermédiaire du module 43 ou 44. De même, la parole codée par le module 48 ou 49 est généralement transmise en mode circuit par l'intermédiaire du module 43 ou 44, mais elle peut être transmise dans des paquets par l'intermédiaire du module 45.

L'invention propose de fournir au terminal mobile 23 une indication du temps T mis par un paquet IP pour être transféré depuis ou vers une unité distante 35, 36 par l'intermédiaire d'une passerelle 32, en précisant le temps Tw de transfert du paquet entre le terminal mobile 23 et la passerelle 32, et le temps Ti de transfert du paquet dans la partie fixe, entre la passerelle 32 et l'unité distante 35, 36.

De façon connue en soi, des messages du protocole ICMP (voir RFC 792 de l'IETF pour la version 4, et RFC 2463 de l'IETF pour la version 6) peuvent être utilisés afin de déterminer le temps T. Le protocole ICMP fait partie intégrante du protocole IP, dans la couche 3 du modèle OSI.

Dans certains cas, les machines source et destination (ici le terminal mobile 23 et l'unité distante 35, 36) ont leurs horloges internes synchronisées par rapport à la même référence de temps. Ceci peut être effectué au moyen de récepteurs GPS (« Global Positioning System »). Une autre possibilité dans le cas de réseaux locaux est d'utiliser le mécanisme de synchronisation décrit dans la RFC 772 de l'IETF.

Lorsque ces organes sont synchronisés, on peut utiliser les messages TIMESTAMP et TIMESTAMP REPLY du protocole ICMP pour déterminer le temps T de transfert d'un paquet dans les deux sens de communication. Le terminal mobile émet le message TIMESTAMP en précisant l'adresse IP de l'unité distante qu'il cherche à joindre. Ce message TIMESTAMP contient son heure d'émission t₁. Lorsqu'il est reçu par la destination, celle-ci forme le message TIMESTAMP REPLY retourné au terminal mobile, en y insérant l'heure d'émission t₁ reçue dans le message TIMESTAMP, l'heure t₂ de réception de ce message TIMESTAMP et l'heure t₃ de réémission du message TIMESTAMP REPLY. En notant l'heure t₄ de réception du message TIMESTAMP REPLY, le terminal mobile peut déterminer :
- le temps T_{U} = t₂ - t₁ de transfert d'un paquet dans le sens montant, du terminal mobile 23 vers l'unité distante 35, 36 ;
- le temps t₃ - t₂ de traitement du paquet par l'unité distante 35, 36 ; et
- le temps T_{D} = t₄ - t₃ de transfert d'un paquet dans le sens descendant, de l'unité distante 35, 36 vers le terminal mobile 23.

Si les organes ne sont pas synchronisés, les messages ECHO et ECHO REPLY du protocole ICMP peuvent être utilisés pour estimer le temps T_{AR} d'aller-retour d'un paquet. Le mécanisme employé consiste alors en ce que : le terminal mobile envoie, à une heure locale t₁, un message ECHO à l'adresse IP de l'unité distante 35, 36 ; celle-ci retourne un message ECHO REPLY ; et à réception de ce message à une heure locale t₄, le terminal mobile détermine le temps d'aller-retour en faisant la différence entre l'heure de réception du message ECHO REPLY et son heure d'émission du message ECHO (T_{AR} = t₄ - t₁).

En référence aux figures 2 et 3, on voit que le premier routeur IP vu par la couche IP du terminal mobile 23 se situe au niveau du GGSN 32. Si le terminal mobile 23 connaît l'adresse IP du GGSN 32, il peut utiliser les messages TIMESTAMP ou ECHO du protocole ICMP pour déterminer de la même manière que précédemment le temps Tw de transfert dans le réseau de communication sans fil 20. Les temps Tw_{U}, Tw_{D} sont obtenus dans les deux sens dans le cas de l'utilisation du message TIMESTAMP. Seul le temps d'aller-retour Tw_{AR} est obtenu dans le cas d'utilisation du message ECHO. Le terminal mobile peut en déduire immédiatement une estimation du temps Ti mis par un paquet dans la partie fixe 10 entre le GGSN 32 et l'unité distante 35, 36, en faisant la différence entre les temps T et Tw : dans le cas de l'utilisation du message TIMESTAMP, Ti_{U} = T_{U} - Tw_{U} et Ti_{D} = T_{D} - Tw_{D}; et dans le cas de l'utilisation du message TIMESTAMP, Ti_{AR} = T_{AR} - Tw_{AR}.

Toutefois, l'adresse IP du GGSN 32 n'est pas connue a priori du terminal mobile. C'est en effet une donnée de configuration du réseau IP qui peut être modifiée et qui n'a pas de raison d'être communiquée aux terminaux d'usagers. Le terminal mobile 23 a simplement la possibilité de sélectionner un GGSN en particulier (c'est-à-dire un ISP particulier) en fournissant un nom de point d'accès (APN, « Access Point Name ») pour l'acheminement de sa requête vers ce GGSN.

Pour obtenir l'adresse IP du GGSN 32 correspondant à cet APN, le terminal mobile 23 peut émettre un paquet IP en plaçant la valeur 1 dans le champ TTL de l'en-tête. Conformément au protocole IP, chaque machine traitant un paquet décrémente le champ TTL, et lorsque sa valeur atteint 0, un message d'erreur est retourné pour signaler que le paquet n'a pas pu être acheminé. On place donc initialement dans ce champ une valeur correspondant au nombre maximum de routeurs à traverser à l'intérieur de l'Internet, le but étant que les paquets qui entreraient dans des boucles fermées à l'intérieur du réseau soient détruits. Ici, le GGSN recevant un paquet avec le champ TTL à.1 retourne un paquet IP à l'adresse du terminal mobile indiquée dans l'en-tête du paquet. Ce paquet retourné contient à son tour l'adresse IP du GGSN 32 qui l'a émis. Celle-ci peut ensuite être utilisée par le terminal mobile 23 pour l'envoi du message TIMESTAMP ou ECHO.

Pour la mise en oeuvre du procédé décrit ci-dessus, une possibilité est de prévoir dans les programmes associés au processeur principal du terminal mobile une procédure d'indication de temps de transfert, déclenchée en réponse à une instruction fournie par l'utilisateur au moyen de l'interface 47 ou par une application exécutée par le processeur. Suivant cette procédure, le terminal mobile émet une requête d'indication de temps de transfert comportant au moins deux messages successifs :
- le premier message est le paquet IP envoyé avec la valeur 1 dans le champ TTL pour récupérer l'adresse IP de la passerelle 32 ;
- le second message est le message TIMESTAMP ou ECHO envoyé à la passerelle pour déterminer le temps Tw de transfert dans le réseau sans fil 20.

A partir de cette estimation de temps Tw, aller-retour ou dans chaque sens, l'utilisateur peut se faire une idée de la qualité de service qu'il aura en se connectant immédiatement à l'Internet, par exemple à des fins de navigation dans des pages Web.

En général, l'utilisateur recherchera une communication avec une unité distante déterminée, par exemple un serveur IP 35. La requête d'indication de temps de transfert comporte alors un troisième message consistant en un message TIMESTAMP ou ECHO envoyé à l'adresse IP de cette unité distante, connue du terminal mobile directement ou après interrogation d'un serveur de nom de domaine (DNS), et permettant de déterminer les temps T et Ti.

Pour exécuter la procédure d'indication de temps de transfert, l'unité de contrôle 42 commande le module de gestion de datagrammes 45 pour émettre les paquets IP adéquats et recevoir les réponses du réseau qui sont traitées pour présenter les temps de transfert à l'utilisateur ou à l'application.

Si l'utilisateur a pour but de transférer un fichier depuis un serveur 35, il pourra examiner les temps Tw, Ti et T, particulièrement dans le sens descendant, pour ne poursuivre que si ces temps sont suffisamment faibles. Sinon, il pourra renoncer, ou réessayer plus tard, ou encore adopter la stratégie suivante :
- si le réseau sans fil 20 paraît encombré (Tw élevé) alors que le réseau Internet 12 ne paraît pas trop encombré (Ti faible), recommencer la procédure de requête d'indication de temps de transfert en spécifiant un autre mode d'accès radio (bande de fréquence, 2G/3G, FDD/TDD, ...) selon les capacités du terminal ;
- si le réseau sans fil 20 paraît fournir une bonne qualité de service (Tw faible) alors que l'Internet 12 paraît encombré (Ti élevé), recommencer la procédure d'indication de temps de transfert en indiquant un autre ISP (APN) pour que la communication passe par une autre passerelle 32.

Ces actions peuvent être décidées directement par l'utilisateur au moyen de l'interface 47. Elles peuvent également être définies préalablement en configurant les applications de messagerie ou de transfert de fichier exécutées par le processeur du terminal (module 46).

Dans la mesure où on peut maintenant transporter de la parole codée sur les réseaux IP, la procédure d'indication de temps de transfert peut également être exécutée avant de demander une communication téléphonique depuis un terminal mobile 23 vers un terminal téléphonique distant 36 raccordé au réseau IP 12. Si les temps de transfert déterminés sont faibles, le terminal essaiera d'établir la communication en mode paquets à travers l'Internet 12. Sinon, il pourra requérir l'établissement d'un circuit à travers le MSC/VLR 28, 29 et le réseau commuté 11 si le terminal 36 est également accessible par le réseau commuté comme illustré sur la figure 1. Ces actions peuvent être décidées directement par l'utilisateur au moyen de l'interface 47. Elles peuvent également être définies préalablement en configurant l'application de téléphonie sur IP exécutée par le processeur du terminal.

II est à noter que la procédure d'indication de temps de transfert décrite précédemment n'est pas la seule applicable dans le cadre de la présente invention.

Par exemple, une autre possibilité est de décomposer le temps Tw de transfert d'un paquet dans le réseau sans fil 20 en trois parties, comme indiqué sur la figure 5 :
- un temps Tr passé sur l'interface radio entre le terminal mobile 23 et le réseau d'accès 22 ;
- un temps Ta passé sur l'interface « Gb » (cas 2G) ou « lu » (cas 3G) entre le réseau d'accès 22 et le SGSN 30, 31 ; et
- un temps Tg passé sur l'interface « Gn » entre le SGSN 30, 31 et le GGSN 32.

Le temps Tr passé sur l'interface radio peut être évalué au niveau du réseau d'accès 22 et fourni au terminal mobile en utilisant les procédures de signalisation appliquées pour le contrôle des ressources radio (RR).

Le temps Ta passé sur l'interface « Gb » dans le cas d'un réseau de seconde génération peut être évalué par le SGSN par des procédures de contrôle de flux du protocole BSSGP, et retourné au terminal mobile en utilisant des messages des procédures de gestion de mobilité (MM). Dans le cas des réseaux de troisième génération, le temps Ta passé sur l'interface « lu » peut être évalué par le SGSN en utilisant des messages ICMP (TIMESTAMP ou ECHO) au niveau de la couche IP inférieure (figure 3).

Le temps Tg passé sur l'interface « Gn » peut être évalué par le SGSN en utilisant des messages ICMP au niveau de la couche IP inférieure de la figure 2 ou 3, et retourné au mobile dans des messages des procédures de gestion de mobilité (MM). A partir de ces trois valeurs, le terminal mobile peut déduire et afficher Tw = Tr +Ta + Tg.

## Revendications

1. Procédé d'estimation de temps de transfert dans un système comportant au moins un réseau de communication sans fil (20) et une partie fixe (10), dans lequel le réseau de communication sans fil comprend des stations radio (24, 26) aptes à communiquer avec des terminaux mobiles (23), et des commutateurs (28-32) incluant des commutateurs de paquets aptes à supporter des communications en mode paquets avec des terminaux mobiles à travers certaines au moins des stations radio, dans lequel au moins un des commutateurs de paquets (32) constitue une passerelle du réseau de communication sans fil avec un réseau de transmission de paquets (12) appartenant à la partie fixe du système, et dans lequel on transmet au moins un message de mesure à un terminal mobile en réponse à une requête d'indication de temps de transfert de paquet issue dudit terminal mobile, **caractérisé en ce qu'**on détermine, à l'aide du message de mesure reçu par le terminal mobile, au moins un temps de transfert de paquet entre le terminal mobile et une passerelle du réseau de communication sans fil avec le réseau de transmission de paquets.

2. Procédé selon la revendication 1, dans lequel le message de mesure inclut une heure d'émission du message par la passerelle (32), et dans lequel on détermine, à partir de ladite heure d'émission et d'une heure de réception par le terminal mobile (23) du message de mesure, un temps de transfert de paquet depuis la passerelle jusqu'au terminal mobile.

3. Procédé selon la revendication 2, dans lequel le message de mesure inclut des données représentatives d'un temps de transfert de paquet depuis le terminal mobile (23) jusqu'à la passerelle (32).

4. Procédé selon la revendication 3, dans lequel le réseau de transmission de paquets (12) fonctionne selon un protocole IP qui intègre un protocole ICMP, ledit terminal mobile (23) incorporant des moyens (45) de communication selon le protocole IP avec le réseau de transmission de paquets, dans lequel la requête d'indication de temps de transfert comprend un message TIMESTAMP du protocole ICMP envoyé par le terminal mobile à une adresse IP de la passerelle (32), et dans lequel le message de mesure comprend une réponse audit message TIMESTAMP retournée par la passerelle selon le protocole ICMP.

5. Procédé selon l'une quelconque des revendications 1 à 4. dans lequel on détermine, à partir d'une heure d'émission par le terminal mobile (23) d'un message relatif à la requête d'indication de temps de transfert et d'une heure de réception par le terminal mobile du message de mesure, un temps d'aller-retour d'un paquet entre ledit terminal mobile et la passerelle (32).

6. Procédé selon la revendication 5, dans lequel le réseau de transmission de paquets (12) fonctionne selon un protocole IP qui intègre un protocole ICMP, ledit terminal mobile (23) incorporant des moyens (45) de communication selon le protocole IP avec le réseau de transmission de paquets, et dans lequel ledit message relatif à la requête d'indication de temps de transfert comprend un paquet IP ayant la valeur 1 dans le champ Time To Live, TTL.

7. Procédé selon la revendication 5, dans lequel le réseau de transmission de paquets (12) fonctionne selon un protocole IP qui intègre un protocole ICMP, ledit terminal mobile (23) incorporant des moyens (45) de communication selon le protocole IP avec le réseau de transmission de paquets, dans lequel ledit message relatif à la requête d'indication de temps de transfert est un message ECHO du protocole ICMP envoyé par le terminal mobile à une adresse IP de la passerelle (32), et dans lequel le message de mesure comprend une réponse audit message ECHO retournée par la passerelle selon le protocole ICMP.

8. Procédé selon la revendication 4 ou 7, dans lequel le terminal mobile (23) émet préalablement un paquet IP ayant la valeur 1 dans le champ Time To Live, TTL, afin d'obtenir l'adresse IP de la passerelle (32).

9. Procédé selon l'une quelconque des revendications 1 à 8, dans lequel on détermine en outre, à l'aide d'un second message de mesure issu d'une unité distante (35, 36) accessible par le réseau de transmission de paquets (12) à une adresse spécifiée dans la requête d'indication de temps de transfert, un temps de transfert de paquet entre ladite unité distante et la passerelle (32).

10. Procédé selon la revendication 9, dans lequel le second message de mesure inclut une heure d'émission du second message par l'unité distante (35, 36), et dans lequel on détermine, à partir de ladite heure d'émission et d'une heure de réception par le terminal mobile (23) du second message de mesure, un temps de transfert de paquet depuis l'unité distante jusqu'au terminal mobile.

11. Procédé selon la revendication 10, dans lequel le second message de mesure inclut des données représentatives d'un temps de transfert de paquet depuis le terminal mobile (23) jusqu'à l'unité distante (35, 36).

12. Procédé selon la revendication 11, dans lequel le réseau de transmission de paquets (12) fonctionne selon un protocole IP qui intègre un protocole ICMP, ledit terminal mobile (23) incorporant des moyens (45) de communication selon le protocole IP avec le réseau de transmission de paquets, dans lequel la requête d'indication de temps de transfert comprend un message TIMESTAMP du protocole ICMP envoyé par le terminal mobile à une adresse IP de l'unité distante (35, 36), et dans lequel le second message de mesure est une réponse audit message TIMESTAMP retournée par l'unité distante selon le protocole ICMP.

13. Procédé selon l'une quelconque des revendications 9 à 12, dans lequel on détermine, à partir d'une heure d'émission par le terminal mobile (23) d'un message relatif à la requête d'indication de temps de transfert et d'une heure de réception par le terminal mobile du second message de mesure, un temps d'aller-retour d'un paquet entre ledit terminal mobile et l'unité distante (35,36).

14. Procédé selon la revendication 13, dans lequel le réseau de transmission de paquets (12) fonctionne selon un protocole IP qui intègre un protocole ICMP, ledit terminal mobile (23) incorporant des moyens (45) de communication selon le protocole IP avec le réseau de transmission de paquets, dans lequel ledit message relatif à la requête d'indication de temps de transfert est un message ECHO du protocole ICMP envoyé par le terminal mobile à une adresse IP de l'unité distante (35, 36), et dans lequel le second message de mesure comprend une réponse audit message ECHO retournée par l'unité distante selon le protocole ICMP.

15. Terminal mobile de radiocommunication, comprenant des moyens de communication en mode paquets avec des unités distantes reliées à un système comportant au moins un réseau de communication sans fil (20) et une partie fixe (10), des moyens d'émission de paquets contenant des requêtes d'indication de temps de transfert de paquet, et des moyens pour déterminer, à l'aide d'un message de mesure reçu en réponse à une requête d'indication de temps de transfert, un temps de transfert de paquet entre le terminal mobile et une passerelle (32) du réseau de communication sans fil avec un réseau de transmission de paquets (12) appartenant à la partie fixe du système.

16. Terminal mobile selon la revendication 15, dans lequel les moyens de détermination de temps de transfert sont agencés pour déterminer, à partir d'une heure d'émission par la passerelle (32) indiquée dans le message de mesure et d'une heure de réception du message de mesure, un temps de transfert de paquet depuis la passerelle jusqu'au terminal mobile (23).

17. Terminal mobile selon la revendication 16, dans lequel les moyens de détermination de temps de transfert sont agencés pour déterminer en outre, à partir de données incluses dans le message de mesure, un temps de transfert de paquet depuis le terminal mobile (23) jusqu'à la passerelle (32).

18. Terminal mobile selon la revendication 16 ou 17, dans lequel le réseau de transmission de paquets (12) fonctionne selon un protocole IP qui intègre un protocole ICMP, dans lequel les moyens d'émission de paquets contenant des requêtes d'indication de temps de transfert sont agencés pour émettre un message TIMESTAMP du protocole ICMP vers une adresse IP de la passerelle (32), et dans lequel les moyens de détermination de temps de transfert sont agencés pour traiter le message de mesure, comprenant une réponse audit message TIMESTAMP reçue de la passerelle selon le protocole ICMP, afin de déterminer au moins le temps de transfert depuis la passerelle jusqu'au terminal mobile (23).

19. Terminal mobile selon l'une quelconque des revendications 15 à 18, dans lequel les moyens de détermination de temps de transfert sont agencés pour déterminer, à partir d'une heure d'émission d'un message relatif à la requête d'indication de temps de transfert et d'une heure de réception du message de mesure, un temps d'aller-retour d'un paquet entre le terminal mobile (23) et la passerelle (32).

20. Terminal mobile selon la revendication 19, dans lequel le réseau de transmission de paquets (12) fonctionne selon un protocole IP qui intègre un protocole ICMP, et dans lequel ledit message relatif à la requête d'indication de temps de transfert comprend un paquet IP ayant la valeur 1 dans le champ Time To Live, TTL.

21. Terminal mobile selon la revendication 19, dans lequel le réseau de transmission de paquets (12) fonctionne selon un protocole IP qui intègre un protocole ICMP, dans lequel ledit message relatif à la requête d'indication de temps de transfert est un message ECHO du protocole ICMP émis vers une adresse IP de la passerelle (32), et dans lequel les moyens de détermination de temps de transfert sont agencés pour traiter le message de mesure, comprenant une réponse audit message ECHO reçue de la passerelle selon le protocole ICMP, afin de déterminer le temps d'aller-retour entre le terminal mobile (23) et la passerelle.

22. Terminal mobile selon la revendication 18 ou 21, comprenant des moyens pour émettre un paquet IP ayant la valeur 1 dans le champ Time To Live, TTL, afin d'obtenir l'adresse IP de la passerelle (32).

23. Terminal mobile selon l'une quelconque des revendications 15 à 22, dans lequel les moyens de détermination de temps de transfert sont en outre agencés pour déterminer, à l'aide d'un second message de mesure issu d'une unité distante (35, 36) accessible par le réseau de transmission de paquets (12) à une adresse spécifiée dans la requête d'indication de temps de transfert, un temps de transfert de paquet entre ladite unité distante et la passerelle (32).

24. Terminal mobile selon la revendication 23, dans lequel les moyens de détermination de temps de transfert sont agencés pour déterminer, à partir d'une heure d'émission par l'unité distante (35, 36) indiquée dans le second message de mesure et d'une heure de réception du second message de mesure, un temps de transfert de paquet depuis l'unité distante jusqu'au terminal mobile (23).

25. Terminal mobile selon la revendication 24, dans lequel les moyens de détermination de temps de transfert sont agencés pour déterminer en outre, à partir de données incluses dans le second message de mesure, un temps de transfert de paquet depuis le terminal mobile (23) jusqu'à l'unité distante (35, 36).

26. Terminal mobile selon la revendication 24 ou 25, dans lequel le réseau de transmission de paquets (12) fonctionne selon un protocole IP qui intègre un protocole ICMP, dans lequel les moyens d'émission de paquets contenant des requêtes d'indication de temps de transfert sont agencés pour émettre un message TIMESTAMP du protocole ICMP vers une adresse IP de l'unité distante (35, 36), et dans lequel les moyens de détermination de temps de transfert sont agencés pour traiter le second message de mesure, comprenant une réponse audit message TIMESTAMP reçue de l'unité distante selon le protocole ICMP, afin de déterminer au moins le temps de transfert depuis l'unité distante jusqu'au terminal mobile (23).

27. Terminal mobile selon l'une quelconque des revendications 23 à 26, dans lequel les moyens de détermination de temps de transfert sont agencés pour déterminer, à partir d'une heure d'émission d'un message relatif à la requête d'indication de temps de transfert et d'une heure de réception du second message de mesure, un temps d'aller-retour d'un paquet entre le terminal mobile (23) et l'unité distante (35, 36).

28. Terminal mobile selon la revendication 27, dans lequel le réseau de transmission de paquets fonctionne selon un protocole IP qui intègre un protocole ICMP, dans lequel ledit message relatif à la requête d'indication de temps de transfert est un message ECHO du protocole ICMP émis vers une adresse IP de l'unité distante (35, 36), et dans lequel les moyens de détermination de temps de transfert sont agencés pour traiter le second message de mesure, comprenant une réponse audit message ECHO reçue de l'unité distante selon le protocole ICMP, afin de déterminer le temps d'aller-retour entre le terminal mobile (23) et l'unité distante.

29. Terminal mobile selon l'une quelconque des revendications 15 à 28, comprenant des moyens pour demander l'établissement de ressources pour un transfert de données depuis ou vers une unité distante (35) accessible par le réseau de transmission de paquets (12), lesquels moyens coopèrent avec les moyens de détermination de temps de transfert pour que l'établissement des ressources soit demandé dans des conditions qui dépendent d'au moins un temps de transfert de paquet déterminé par les moyens de détermination de temps de transfert.

30. Terminal mobile selon l'une quelconque des revendications 15 à 28, comprenant des moyens pour demander l'établissement d'une communication téléphonique avec une unité distante (36) accessible d'une part par le réseau de transmission de paquets (12) et d'autre part par un réseau à commutation de circuit (11) relié au réseau de communication sans fil (20), lesquels moyens coopèrent avec les moyens de détermination de temps de transfert pour que l'établissement de la communication téléphonique soit demandé par l'intermédiaire soit du réseau de transmission de paquets soit du réseau à commutation de circuit en fonction d'au moins un temps de transfert de paquet déterminé par les moyens de détermination de temps de transfert.

## Claims

1. Method for estimating transfer times in a system comprising at least one wireless communication network (20) and a fixed part (10), in which the wireless communication network comprises radio stations (24, 26) capable of communicating with mobile terminals (23), and switches (28-32) including packet switches capable of supporting communications in packet mode with mobile terminals across at least some of the radio stations, in which at least one of the packet switches (32) constitutes a gateway of the wireless communication network with a packet transmission network (12) belonging to the fixed part of the system, and in which at least one measurement message is transmitted to a mobile terminal in response to a packet transfer time indication request from said mobile terminal, **characterized in that** at least one packet transfer time for transferring between the mobile terminal and a gateway of the wireless communication network with the packet transmission network is determined by means of the measurement message received by the mobile terminal.

2. Method according to claim 1, in which the measurement message includes a time indication of a transmission of the message by the gateway (32), and in which a packet transfer time for transferring from the gateway to the mobile terminal is determined on the basis of said time indication of a transmission and of a time indication of a reception by the mobile terminal (23) of the measurement message.

3. Method according to claim 2, in which the measurement message includes data representative of a packet transfer time for transferring from the mobile terminal (23) to the gateway (32).

4. Method according to claim 3, in which the packet transmission network (12) operates according to an IP protocol which integrates an ICMP protocol, said mobile terminal (23) incorporating means (45) for communicating according to the IP protocol with the packet transmission network, in which the transfer time indication request comprises an ICMP protocol TIMESTAMP message sent by the mobile terminal to an IP address of the gateway (32), and in which the measurement message comprises a response to said TIMESTAMP message according to the ICMP protocol sent by the gateway.

5. Method according to any one of the claims 1 to 4, in which a round-trip time for a packet between said mobile terminal and the gateway (32) is determined on the basis of a time indication of a transmission by the mobile terminal (23) of a message relating to the transfer time indication request and of a time indication of a reception by the mobile terminal of the measurement message.

6. Method according to claim 5. in which the packet transmission network (12) operates according to an IP protocol which integrates an ICMP protocol, said mobile terminal (23) incorporating means (45) for communicating according to the IP protocol with the packet transmission network, and in which said message relating to the transfer time indication request comprises an IP packet having the value 1 in the Time to Live, TTL field.

7. Method according to claim 5, in which the packet transmission network (12) operates according to an IP protocol which integrates an ICMP protocol, said mobile terminal (23) incorporating means (45) for communicating according to the lP protocol with the packet transmission network, in which said message relating to the transfer time indication request is an ICMP protocol ECHO message sent by the mobile terminal to an IP address of the gateway (32), and in which the measurement message comprises a response to said ECHO message according to the ICMP protocol sent by the gateway.

8. Method according to claim 4 or 7, in which the mobile terminal (23) transmits, beforehand, an IP packet having the value 1 in the Time to Live, TTL field so as to obtain the IP address of the gateway (32).

9. Method according to any one of claims 1 to 8, further including a step of determining, by means of a second measurement message from a remote unit (35,36) reachable via the packet (12) transmission network at an address specified in the transfer time indication request, a packet transfer time for transferring between said remote unit and the gateway (32).

10. Method according to claim 9, in which the second measurement message includes a time indication of transmission of the second message by the remote unit (35, 36), and in which a packet transfer time for transferring from the remote unit to the mobile terminal is determined on the basis of said time indication of transmission and of a time indication of reception by the mobile terminal (23) of the second measurement message.

11. Method according to claim 10, in which the second measurement message includes data representative of a packet transfer time for transferring from the mobile terminal (23) to the remote unit (35, 36).

12. Method according to claim 11, in which the packet transmission network (12) operates according to an IP protocol which integrates an ICMP protocol, said mobile terminal (23) incorporating means (45) for communicating according to the IP protocol with the packet transmission network in which the transfer time indication request comprises an ICMP protocol TIMESTAMP message sent by the mobile terminal to an IP address of the remote unite (35, 36), and in which the second measurement message is a response to said TIMESTAMP message according to the ICMP protocol sent by the remote unit.

13. Method according to any one of claims 9 to 12, in which a round-trip time for a packet between said mobile terminal and the remote unit (35, 36) is determined on the basis of a time indication of transmission by the mobile terminal (23) of a message relating to the transfer time indication request and of a time indication of reception by the mobile terminal of the second measurement message.

14. Method according to claim 13, in which the packet transmission network (12) operates according to an IP protocol which integrates an ICMP protocol, said mobile terminal (23) incorporating means (45) for communicating according to the IP protocol with the packet transmission network, in which said message relating to the transfer time indication request is an ICMP protocol ECHO message sent by the mobile terminal to an IP address of the remote unit (35, 36), and in which the second measurement message comprises a response to said ECHO message according to the ICMP protocol sent by the remote unit.

15. Mobile radiocommunication terminal, comprising means for communicating in packet mode with remote units linked to a system comprising at least one wireless communication network (20) and a fixed part (10), means for transmitting packets containing packet transfer time indication requests, and means for determining, by means of a measurement message received in response to a transfer time indication request, a packet transfer time for transferring between the mobile terminal and a gateway (32) of the wireless communication network with a packet transmission network (12) included in the fixed part of the system.

16. Mobile terminal according to claim 15, in which the means for determining transfer times are adapted for determining, on the basis of a time indication of transmission by the gateway (32) indicated in the measurement message and of a time indication of reception of the measurement message, a packet transfer time for transferring from the gateway to the mobile terminal (23).

17. Mobile terminal according to claim 16, in which the means for determining transfer times are adapted for further determining, on the basis of data included in the measurement message, a packet transfer time for transferring from the mobile terminal (23) to the gateway (32).

18. Mobile terminal according to claim 16 or 17, in which the packet transmission network (12) operates according to an IP protocol which integrates an ICMP protocol, in which the means for transmitting packets containing transfer time indication requests are adapted for transmitting an ICMP protocol TIMESTAMP message to an IP address of the gateway (32), and in which the means for determining transfer times are adapted for processing the measurement message which includes a response to said TIMESTAMP message according to the ICMP protocol received from the gateway, so as to determine at least the transfer time for transferring from the gateway to the mobile terminal (23).

19. Mobile terminal according to any one of the claims 15 to 18, in which the means for determining transfer times are adapted for determining, on the basis of a time indication of a transmission of a message relating to the transfer time indication request and of a time indication of reception of the measurement message, a round-trip time for a packet between the mobile terminal (23) and the gateway (32).

20. Mobile terminal according to claim 19, in which the packet transmission network (12) operates according to an IP protocol which integrates an ICMP protocol, and in which said message relating to the transfer time indication request comprises an IP packet having the value 1 in the Time to Live, TTL field.

21. Mobile terminal according to claim 19, in which the packet transmission network (12) operates according to an IP protocol which integrates an ICMP protocol, in which said message relating to the transfer time indication request is an ICMP protocol ECHO message transmitted to an IP address of the gateway (32), and in which the means for determining transfer times are adapted for processing the measurement message which includes a response to said ECHO message according to the ICMP protocol received from the gateway, so as to determine the round-trip time between the mobile terminal (23) and the gateway,

22. Mobile terminal according to claim 18 or 21, comprising means for transmitting an IP packet having the value 1 in the Time to Live, TTL field, so as to obtain the IP address of the gateway (32).

23. Mobile terminal according to any one of claims 15 to 22, in which the means for determining transfer times are adapted for further determining, by means of a second measurement message from a remote unit (35, 36) reachable via the packet transmission network (12) at an address specified in the transfer time indication request, a packet transfer time for transferring between said remote unit and the gateway (32).

24. Mobile terminal according to claim 23, in which the means for determining transfer times are adapted for determining, on the basis of a time indication of transmission by the remote unit (35, 36) indicated in the second measurement message and of a time indication of reception of the second measurement message, a packet transfer time for transferring from the remote unit to the mobile terminal. (23).

25. Mobile terminal according to claim 24, in which the means for determining transfer times are adapted for further determining, on the basis of data included in the second measurement message, a packet transfer time for transferring from the mobile terminal (23) to the remote unit (35, 36).

26. Mobile terminal according to claim 24 or 25, in which the packet transmission network (12) operates according to an IP protocol which integrates an ICMP protocol, in which the means for transmitting packets containing transfer time indication requests are adapted for transmitting an ICMP protocol TIMESTAMP message to an IP address of the remote unit (35, 36), and in which the means for determining transfer time are adapted for processing the second measurement message which includes a response to said TIMESTAMP message according to the ICMP protocol received from the remote unit, so as to determine at least the transfer time for transferring from the remote unit to the mobile terminal (23).

27. Mobile terminal according to any one of claims 23 to 26, in which the means for determining transfer times are adapted for determining, on the basis of a time indication of transmission of a message relating to the transfer time indication request and of a time indication of reception of the second measurement message, a round-trip time for a packet between the mobile terminal (23) and the remote unit (35,36).

28. Mobile terminal according to claim 27, in which the packet transmission network operates according to an IP protocol which integrates an ICMP protocol, in which said message relating to the transfer time indication request is an ICMP protocol ECHO message transmitted to an IP address of the remote unit (35, 36), and in which the means for determining transfer time are adapted for processing the second measurement message which includes a response to said ECHO message according to the ICMP protocol received from the remote unit, so as to determine the round-trip time between the mobile terminal (23) and the remote unit.

29. Mobile terminal according to any one of claims 15 to 28, comprising means for requesting the setting up of resources for a transfer of data from or to a remote unit (35) reachable via the packet transmission network (12), which means cooperate with the means for determining transfer time so that the setting up of the resources is requested under conditions which depend on at least one packet transfer time determined by the means for determining transfer time.

30. Mobile terminal according to any one of claims 15 to 28, comprising means for requesting the setting up of a telephone communication with a remote unit (36) reachable on the one hand via the packet transmission network (12) and on the other hand via a circuit-switching network (11) linked to the wireless communication network (20), which means cooperate with the means for determining transfer time so that the setting up of the telephone communication is requested by way either of the packet transmission network or of the circuit-switching network as a function of at least one packet transfer time determined by the means for determining transfer time.

## Patentansprüche

1. Verfahren zur Schätzung der Übertragungszeit in einem System, welches mindestens ein drahtloses Kommunikationsnetzwerk (20) und einen Festnetzteil (10) umfasst, bei dem das drahtlose Kommunikationsnetzwerk Funkstationen (24, 26) umfasst, die dazu geeignet sind, mit mobilen Endgeräten (23) zu kommunizieren, sowie Vermittlungseinrichtungen (28-32), die Paketvermittlungseinrichtungen umfassen, welche dazu geeignet sind, paketvermittelte Verbindungen mit mobilen Endgeräten über zumindest bestimmte der Funkstationen zu unterstützten, wobei mindestens eine der Paketvermittlungseinrichtungen (32) ein Gateway des drahtlosen Kommunikationsnetzwerks zu einem Paketübertragungsnetzwerk (12) darstellt, das zum Festnetzteil des Systems gehört, und in dem mindestens eine Messnachricht an ein mobiles Endgerät als Antwort auf eine von diesem mobilen Endgerät ausgegangene Anforderung zur Angabe der Paketübertragungszeit übertragen wird, **dadurch gekennzeichnet, dass** mit Hilfe der von dem mobilen Endgerät empfangenen Messnachricht mindestens eine Paketübertragungszeit zwischen dem mobilen Endgerät und einem Gateway des drahtlosen Kommunikationsnetzwerks zum Paketübertragungsnetz bestimmt wird.

2. Verfahren nach Anspruch 1, bei dem die Messnachricht eine Sendeuhrzeit der Nachricht durch das Gateway (32) aufweist und bei dem ausgehend von dieser Sendeuhrzeit und der Empfangsuhrzeit der Messnachricht durch das mobile Endgerät (23) eine Paketübertragungszeit von dem Gateway bis zum mobilen Endgerät bestimmt wird.

3. Verfahren nach Anspruch 2, bei dem die Messnachricht Daten aufweist, die für eine Psketübertragungszeit von dem mobilen Endgerät (23) bis zum Gateway (32) repräsentativ sind.

4. Verfahren nach Anspruch 3, bei dem das Paketübertragungsnetzwerk (12) mit einem IP-Protokoll arbeitet, in das ein ICMP-Protokoll integriert ist, wobei das mobile Endgerät (23) Mittel (45) zur Kommunikation über das IP-Protokoll mit dem Paketübertragungsnetzwerk umfasst, bei dem die Anforderung zur Angabe der Übertragungszeit eine Nachricht TIMESTAMP des ICMP-Protokolls umfasst, die von dem mobilen Endgerät an eine IP-Adresse des Gateways (32) gesendet wird, und bei dem die Messnachricht eine Antwort auf diese Nachricht TIMESTAMP umfasst, die von dem Gateway über das ICMP-Protokoll zurückgesendet wird.

5. Verfahren nach einem der Ansprüche 1 bis 4, bei dem ausgehend von einer Sendeuhrzeit durch das mobile Endgerät (23) für eine Nachricht, welche sich auf die Anforderung zur Angabe der Übertragungszeit bezieht, und einer Empfangsuhrzeit der Messnachricht durch das mobile Endgerät eine Zeit für den Hin- und Rückweg eines Pakets zwischen dem mobilen Endgerät und dem Gateway (32) bestimmt wird.

6. Verfahren nach Anspruch 5, bei dem das Paketübertragungsnetzwerk (12) mit einem IP-Protokoll arbeitet, in das ein ICMP-Protokoll integriert ist, wobei das mobile Endgerät (23) Mittel (45) zur Kommunikation über das IP-Protokoll mit dem Paketübertragungsnetzwerk umfasst, und bei dem die Nachricht, die sich auf die Anforderung zur Angabe der Übertragungszeit bezieht, ein IP-Paket umfasst, welches den Wert 1 im Feld Time To Live, TTL, aufweist.

7. Verfahren nach Anspruch 5, bei dem das Paketübertragungsnetzwerk (12) mit einem IP-Protokoll arbeitet, in das ein ICMP-Protokoll integriert ist, wobei das mobile Endgerät (23) Mittel (45) zur Kommunikation über das IP-Protakoll mit dem Paketübertragungsnetzwerk umfasst, und bei dem die Nachricht, die sich auf die Anforderung zur Angabe der Übertragungszeit bezieht, eine Nachricht ECHO des ICMP-Protokolls ist, welche von dem mobilen Endgerät an eine IP-Adresse des Gateways (32) gesendet wird, und bei dem die Messnachricht eine Antwort auf diese Nachricht ECHO umfasst, die von dem Gateway über das ICMP-Protokoll zurückgesendet wird.

8. Verfahren nach Anspruch 4 oder 7, bei dem das mobile Endgerät (23) vorab ein IP-Paket mit dem Wert 1 im Feld Time to Live, TTL, sendet, um die IP-Adresse des Gateways (32) zu erhalten,

9. Verfahren nach einem der Ansprüche 1 bis 8, bei dem außerdem mit Hilfe einer zweiten Messnachricht, die von einer entfernten Einheit (35, 36) ausgegangen ist, auf welche über das Paketübertragungsnetzwerk (12) unter einer in der Anforderung zur Angabe der Übertragungszeit spezifizierten Adresse zugegriffen werden kann, eine Paketübertragungszeit zwischen der entfernten Einheit und dem Gateway (32) bestimmt wird.

10. Verfahren nach Anspruch 9, bei dem die zweite Messnachricht eine Sendeuhrzeit der zweiten Nachricht durch die entfernte Einheit (35, 36) aufweist, und bei dem ausgehend von dieser Sendeuhrzeit und einer Empfangsuhrzeit der zweiten Messnachricht durch das mobile Endgerät (23) eine Paketübertragungszeit von der entfernten Einheit bis zu dem mobilen Endgerät bestimmt wird.

11. Verfahren nach Anspruch 10, bei dem die zweite Messnachricht Daten aufweist, die für eine Paketübertragungszeit von dem mobilen Endgerät (23) bis zu der entfernten Einheit (35, 36) repräsentativ sind.

12. Verfahren nach Anspruch 11, bei dem das Paketübertagungsnetzwerk (12) mit einem IP-Protokoll arbeitet, in das ein ICMP-Protokoll integriert ist, wobei das mobile Endgerät (23) Mittel (45) zur Kommunikation über das IP-Protokoll mit dem Paketübertragungsnetzwerk umfasst, bei dem die Anforderung zur Angabe der Übertragungszeit eine Nachricht TIMESTAMP des ICMP-Protokolls umfasst, die von dem mobilen Endgerät an eine IP-Adresse der entfernten Einheit (35, 36) gesendet wird, und bei dem die zweite Messnachricht eine Antwort auf diese Nachricht TIMESTAMP ist, die von der entfernten Einheit über das ICMP-Protokoll zurückgesendet wird,

13. Verfahren nach einem der Ansprüche 9 bis 12, bei dem ausgehend von einer Sendeuhrzeit durch das mobile Endgerät (23) für eine Nachricht, die sich auf die Anforderung zur Angabe der Obertragungszeit bezieht, und einer Empfangsuhrzeit der zweiten Messnachricht durch das mobile Endgerät eine Zeit für Hin- und Rückweg eines Pakets zwischen dem mobilen Endgerät und einer entfernten Einheit (35, 36) bestimmt wird.

14. Verfahren nach Anspruch 13, bei dem das Paketübertragungsnetzwerk (12) mit einem IP-Protokoll arbeitet, in das ein ICMP-Protokoll integriert ist, wobei das mobile Endgerät (23) Mittel (45) zur Kommunikation über das IP-Protokoll mit dem Paketübertragungsnetzwerk umfasst, bei dem die Nachricht, die sich auf die Anforderung zur Angabe der Übertragungszeit bezieht, eine Nachricht ECHO des ICMP-Protokolls ist, welche von dem mobilen Endgerät an eine IP-Adresse der entfernten Einheit (35, 36) gesendet wird, und bei dem die zweite Messnachricht eine Antwort auf die Nachricht ECHO umfasst, die von der entfernten Einheit über das ICMP-Protokoll zurückgesendet wird.

15. Mobiles Funkkommunikationsendgerät, umfassend Mittel zur paketvermittelten Kommunikation mit entfernten Einheiten, die mit einem System verbunden sind, welches mindestens ein drahtloses Kommunikationsnetzwerk (20) und einen Festnetzteil (10) umfasst, Mittel zum Senden von Paketen, die Anforderungen zur Angabe der Paketübertragungszeit enthalten, und Mittel, um mit Hilfe einer Messnachricht, die als Antwort auf eine Anforderung zur Angabe der Übertragungszeit empfangen wurde, eine Paketübertragungszeit zwischen dem mobilen Endgerät und einem Gateway (32) des drahtlosen Kommunikationsnetzwerks zu einem Paketübertragungsnetzwerk (12) zu bestimmen, das zum Festnetzteil des Systems gehört.

16. Mobiles Endgerät nach Anspruch 15, bei dem die Mittel zur Bestimmung der Übertragungszeit so angeordnet sind, dass sie ausgehend von einer Sendeührzeit durch das Gateway (32), die in der Messnachricht angegeben ist, und einer Empfanguhrzeit der Messnachricht, eine Paketübertragungszeit von dem Gateway bis zu dem mobilen Endgerät (23) bestimmen.

17. Mobiles Endgerät nach Anspruch 16, bei dem die Mittel zur Bestimmung der Übertragungszeit so angeordnet sind, dass sie außerdem anhand der in der Messnachricht enthaltenen Daten eine Paketübertragungszeit von dem mobilen Endgerät (23) bis zum Gateway (32) zu bestimmen.

18. Mobiles Endgerät nach Anspruch 16 oder 17, bei dem das Paketübertragungsnetzwerk (12) mit einem IP-Protokoll arbeitet, in das ein ICMP-Protokoll integriert ist, bei dem die Mittel zum Senden von Paketen, welche Anforderungen zur Angabe der Übertragungszeit enthalten, so angeordnet sind, dass sie eine Nachricht TIMESTAMP des ICMP-Protokolls an eine IP-Adresse des Gateways (32) senden, und bei dem die Mittel zur Bestimmung der Übertragungszeit so angeordnet sind, dass sie die Messnachricht verarbeiten, welche eine Antwort auf die Nachricht TIMESTAMP umfasst, die von dem Gateway über das ICMP-Protokoll empfangen wurde, um zumindest die Übertragungszeit vom Gateway bis zu dem mobilen Endgerät (23) zu bestimmen.

19. Mobiles Endgerät nach einem der Ansprüche 15 bis 18, bei die Mittel zur Bestimmung der Übertragungszeit so angeordnet sind, dass sie ausgehend von einer Sendeuhrzeit einer Nachricht, welche sich auf die Anforderung zur Angabe der Übertragungszeit bezieht, und einer Empfangsuhrzeit der Messnachricht eine Zeit für den Hin- und Rückweg eines Pakets zwischen dem mobilen Endgerät (23) und dem Gateway (32) bestimmen.

20. Mobiles Endgerät nach Anspruch 19, bei dem das Paketübertragungsnetzwerk (12) mit einem IP-Protokoll arbeitet, in das ein ICMP-Protokoll integriert ist, und bei dem die Nachricht, die sich auf die Anforderung zur Angabe der Übertragungseit bezieht, ein IP-Paket umfasst, welches den Wert 1 im Feld Time To Live, TTL, aufweist.

21. Mobiles Endgerät nach Anspruch 19, bei dem das Paketübertragungsnetzwerk (12) mit einem IP-Protokoll arbeitet, in das ein ICMP-Protokoll integriert ist, bei dem die Nachricht, die sich auf die Anforderung zur Angabe der Übertragungszeit bezieht, eine Nachricht ECHO des ICMP-Protokolls ist, weiche an eine IP-Adresse des Gateways (32) gesendet wird, und bei dem die Mittel zur Bestimmung der Übertragungszeit so angeordnet sind, dass sie die Messnachricht verarbeiten, die eine Antwort auf diese Nachricht ECHO umfasst, die von dem Gateway über das ICMP-Protokoll empfangen wurde, um die Zeit für Hin- und Rückweg zwischen dem mobilen Endgerät (23) und dem Gateway zu bestimmen.

22. Mobiles Endgerät nach Anspruch 18 oder 21, umfassend Mittel zum Senden eines IP-Pakets mit dem Wert 1 im Feld Time to Live, TTL, um die IP-Adresse des Gateways (32) zu erhalten.

23. Mobiles Endgerät nach einem der Ansprüche 15 bis 22, bei dem die Mittel zur Bestimmung der Übertragungszeit außerdem so angeordnet sind, dass sie mit Hilfe einer zweiten Messnachricht, die von einer entfernten Einheit (35, 36) ausgegangen ist, auf welche über das Paketübertragungsnetzwerk (12) unter einer in der Anforderung zur Angabe der Übertragungszeit spezifizierten Adresse zugegriffen werden kann, eine Paketübertragungszeit zwischen der entfernten Einheit und dem Gateway (32) bestimmen.

24. Mobiles Endgerät nach Anspruch 23, bei dem die Mittel zur Bestimmung der Übertragungszeit so angeordnet sind, dass sie ausgehend von einer in der zweiten Messnachricht angegebenen Sendeuhrzeit durch die entfernte Einheit (35, 36) und einer Empfangsuhrzeit der zweiten Messnachricht eine Paketübertragungszeit von der entfernten Einheit bis zu dem mobilen Endgerät (23) bestimmen.

25. Mobiles Endgerät nach Anspruch 24, bei dem die Mittel zur Bestimmung der Obertragungszeit so angeordnet sind, dass sie außerdem ausgehend von den in der zweiten Messnachricht enthaltenen Daten eine Paketübertragungszeit von dem mobilen Endgerät (23) bis zu der entfernten Einheit (35,36) bestimmen.

26. Mobiles Endgerät nach Anspruch 24 oder 25, bei dem das Paketübertragungsnetzwerk (12) mit einem IP-Protokoll arbeitet, in das ein ICMP-Protokoll integriert ist, bei dem die Mittel zum Senden von Paketen, welche Anforderungen zur Angabe der Übertragungszeit enthalten, so angeordnet sind, dass sie eine Nachricht TIMESTAMP des ICMP-Protokolls an eine IP-Adresse der entfernten Einheit (35, 36) senden, und bei dem die Mittel zur Bestimmung der Übertragungszeit so angeordnet sind, dass sie die zweite Messnachricht verarbeiten, die eine Antwort auf die Nachricht TIMESTAMP ist, die von der entfernten Einheit über das ICMP-Protokoll empfangen wurde, um zumindest die Übertragungszeit von der entfernten Einheit bis zu dem mobilen Endgerät (23) zu bestimmen.

27. Mobiles Endgerät nach einem der Ansprüche 23 bis 26, bei dem die Mittel zur Bestimmung der Übertragungszeit so angeordnet sind, dass sie ausgehend von einer Sendeuhrzeit einer Nachricht, die sich auf die Anforderung zur Angabe der Übertragungszeit bezieht, und einer Empfangsuhrzeit der zweiten Messnachricht eine Zeit für Hin- und Rückweg eines Pakets zwischen dem mobilen Endgerät (23) und einer entfernten Einheit (35, 36) bestimmen.

28. Mobiles Endgerät nach Anspruch 27, bei dem das Paketübertragungsnetzwerk mit einem IP-Protokoll arbeitet, in das ein ICMP-Protokoll integriert ist, bei dem die Nachricht, die sich auf die Anforderung zur Angabe der Übertragungszeit bezieht, eine Nachricht ECHO des ICMP-Protokolls ist, welche an eine IP-Adresse der entfernten Einheit (35, 36) gesendet wird, und bei dem die Mittel zur Bestimmung der Übertragungszeit so angeordnet sind, dass sie die zweite Messnachricht verarbeiten, die eine Antwort auf die Nachricht ECHO umfasst, die von der entfernten Einheit über das ICMP-Protokoll empfangen wurde, um die Zeit für Hin- und Rückweg zwischen dem mobilen Endgerät (23) und der entfernten Einheit zu bestimmen,

29. Mobiles Endgerät nach einem der Ansprüche 15 bis 28, umfassend Mittel, um den Aufbau von Ressourcen für eine Datenübertragung von oder zu einer entfernten Einheit (35) anzufordern, auf die über das Paketübertragungsnetzwerk (12) zugegriffen werden kann, wobei diese Mittel mit den Mitteln zur Bestimmung der Übertragungszeit kooperieren, damit der Aufbau der Ressourcen unter Bedingungen angefordert wird, die mindestens von einer Paketubertragungszeit abhängen, die von den Mitteln zur Bestimmung der Übertragungszeit bestimmt wurde.

30. Mobiles Endgerät nach einem der Ansprüche 15 bis 28, umfassend Mittel, um den Aufbau einer Telefonverbindung zu einer entfernten Einheit (36) anzufordern, die einerseits über das Paketübertragungsnetzwerk (12) und andererseits über ein mit dem drahtlosen Kommunikationsnetzwerk (20) verbundenes leitungsvermitteltes Netzwerk (11) zugänglich ist, wobei diese Mittel mit den Mitteln zur Bestimmung der Übertragungszeit kooperieren, damit der Aufbau der Telefonverbindung entweder über das Paketübertragungsnetzwerk oder das leitungsvermittelte Netzwerk aufgebaut wird, und zwar in Abhängigkeit von mindestens einer Paketübertragungszeit, die von den Mitteln zur Bestimmung der Übertragungszeit bestimmt wurde.
